# EUROPÄISCHE PATENTSCHRIFT

(11) **EP 1 243 490 B1**
(45) Veröffentlichungstag und Bekanntmachung des Hinweises auf die Patenterteilung: **30.07.2003**
(21) Anmeldenummer: 02005087.8
(22) Anmeldetag: 07.03.2002
(51) Int. Cl.: B60S 5/06, B66F 9/075, B60K 1/04

(54) **Batterie-elektrisch betriebenes Flurförderzeug, insbesondere Gegengewichtsstapler**
Battery driven industrial truck, particularly fork lift
Chariot de manutention entraîné par batterie

(30) Priorität: 24.03.2001 DE 10114571
(43) Veröffentlichungstag der Anmeldung: 25.09.2002
(73) Patentinhaber: Jungheinrich Aktiengesellschaft, 22047 Hamburg (DE)
(72) Erfinder: Magens, Ernst-Peter, Dr.-Ing., 22949 Ammersbek (DE); Verch, Jonni, Dipl.-Ing., 25485 Langeln (DE)
(74) Vertreter: Patentanwälte Hauck, Graalfs, Wehnert, Döring, Siemons, Schildberg

(56) Entgegenhaltungen:
- DE-A- 3 020 807
- DE-A- 4 321 768
- FR-A- 2 137 908
- US-A- 2 916 172
- US-A- 4 312 418

## Beschreibung

Die Erfindung bezieht sich auf ein batterie-elektrisch betriebenes Flurförderzeug, insbesondere einen Gegengewichtsstapler nach dem Oberbegriff des Patentanspruchs 1. Ein solches Flurförderzeug ist aus DE 30 20 807 A bekannt.

Zum Transport und Handhabung von palettierten Stückgütern erweist sich ein freitragender Stapler (Gegengewichts-Gabelstapler) als universelles Gerät. Es ist mit einem verbrennungsmotorischen oder batterie-elektrischen Antrieb versehen, und je nach Art der gewählten Bereifung kann es auch im Freien auf unebenem Gelände bewegt werden. Die zum Betrieb der Flurförderzeuge notwendige Energie muss vom Fahrzeug mitgeführt werden. Die Speicherung der Energie erfolgt bei verbrennungsmotorisch betriebenen Staplern im Treibstofftank und bei batterie-elektrischen Flurförderzeugen in einer Batterie. Letztere muss am Ende einer Schicht für die Dauer von mindestens acht Stunden wieder geladen werden. Wird der Stapler über mehrere Schichten nacheinander eingesetzt, so muss die entladene Batterie am Ende jeder Schicht gegen eine frisch geladene ausgetauscht werden.

Da die Batterie meist mittig im Fahrzeug eingebaut ist und ihre Positionierung für die Standsicherheit von Bedeutung ist und somit für die Gebrauchsfähigkeit des Flurförderzeugs, ist der notwendige Wechsel nur aufwändig durchzuführen. Insbesondere bei Fahrzeugen mit einer Fahrerkabine, wie sie häufig bei diesem Fahrzeugtyp vorkommt, sind etliche Handgriffe nötig, um den Wechsel durchzuführen. Darüber hinaus muss das Fahrerschutzdach so gestaltet sein, dass die Batterieentnahme mit Hilfe eines Hebezeugs möglich ist. Erschwerend beim Einsatz von Gegengewichtsstaplern bekannter Bauart ist die sogenannte Resttragfähigkeit, d.h. die maximal zulässige Traglast in Abhängigkeit von der Hubhöhe. Diese wird aus Standsicherheitsgründen mit steigender Hubhöhe zunehmend kleiner, was die Wirtschaftlichkeit des Fahrzeugeinsatzes, insbesondere in solchen Fällen, in denen große Lasten auf große Höhen angehoben werden sollen, reduziert. Außerdem ergeben sich bei Stapelvorgängen in großen Höhen für den Fahrer schlechte Sichtverhältnisse, was sich negativ auf die Betriebssicherheit, die Arbeitsgeschwindigkeit und die physische Belastung des Fahrers auswirkt.

Es ist bei batterie-elektrisch betriebenen Gabelstaplern bekannt, die Batterie seitlich aus dem Fahrzeugrahmen herauszuschieben. Hierfür muss der Fahrzeugrahmen entsprechend konstruktiv ausgestaltet sein, und es muss eine stationäre Einrichtung vorhanden sein, auf welche die Batterie geschoben wird, wenn sie das Fahrzeug verlässt. Durch die große seitliche Öffnung wird die Rahmenstruktur des Fahrzeugs beeinträchtigt.

Es ist ferner bekannt, das Fahrerplatzmodul einschließlich des Fahrerschutzdaches, welches die Batterie abdeckt, zur Wartung der Batterie und zu ihrem Wechsel nach hinten zu klappen. Diese Lösung ist vergleichbar mit einer klappbaren Fahrerkabine für einen LKW. Aufgrund des stark außermittigen Drehpunktes ist eine relativ große Kraft notwendig, um das Fahrerplatzmodul zu kippen und in der geöffneten Stellung zu halten. Daher ist für den Kippvorgang zumeist eine zusätzliche Antriebsvorrichtung erforderlich. Außerdem fallen alle in der Kabine nicht gesicherten Gegenstände beim Kippvorgang heraus bzw. durcheinander.

Zur Verbesserung der Resttragfähigkeit sind Flurförderzeuge bekannt geworden, bei denen die Lastachse beim Anheben der Last bei unveränderter Neigung des neigbaren Hubgerüstes nach vorn geschoben wird. Bei dieser Lösung muss eine Verschiebung der im Allgemeinen stark belasteten Lastachse erfolgen, wenn die Standsicherheit verbessert werden soll, was eine entsprechende Ausführung der Lastachse und ihres Antriebs voraussetzt. Eine andere Lösung zu diesem Problem, welche in der DE 198 15 121 A1 offenbart ist, sieht ein verschiebbares Gegengewicht vor, das bei Bedarf in Richtung Fahrzeugheck einschließlich der hinteren Lenkachse nach hinten verschoben werden kann. Bei dieser Ausführungsform ändert sich der Radstand des Fahrzeugs während des Verschiebevorgangs, was eine Verstimmung der Lenkgeometrie mit entsprechendem Reifenverschleiß hervorruft.

Zur Verbesserung der Sichtverhältnisse beim Stapeln in großen Hubhöhen sind Flurförderzeuge bekannt geworden, bei denen der Fahrersitz und ggf. das Fahrerplatzmodul beim Anheben der Last nach hinten geneigt wird, um so die Sicht auf die Last in großen Hubhöhen zu verbessern. Auch hierfür ist ein separater Antrieb erforderlich, der entsprechend der jeweiligen Hubhöhe angesteuert wird.

Der Erfindung liegt die Aufgabe zugrunde, ein batterie-elektrisch betriebenes Flurförderzeug, insbesondere Gegengewichtsstapler, zu schaffen, bei dem die Zugänglichkeit der Batterie optimiert ist.

Diese Aufgabe wird durch die Merkmale des Patentanspruchs 1 gelöst.

Bei der Erfindung weist der Grundkörper einen nach oben offenen Aufnahmeraum für die Batterie auf. Der Aufnahmeraum befindet sich vorzugsweise zwischen den Fahrzeugachsen. Derartige Aufnahmeräume sind jedoch an sich bekannt. Erfindungsgemäß ist die Fahrerplatzanordnung auf einer deckelartigen Abdeckung angeordnet, die annähernd horizontal verschiebbar oder auch geneigt an der Oberseite des Grundkörpers geführt ist zur wahlweisen Freigabe des Aufnahmeraums. Bei einer geneigten Anordnung ist jedoch ein Antrieb erforderlich.

Für die Wartung der Batterie oder für den Batteriewechsel lässt sich die Abdeckung mitsamt der Fahrerplatzanordnung nach hinten verschieben. Dadurch ist die Batterie frei von oben zugänglich und kann zum Beispiel mit Hilfe eines Hebezeugs einfach nach oben aus dem Fahrzeug entnommen werden. Es versteht sich, dass bei einer derartigen Ausbildung der Oberseite des Fahrzeuggrundkörpers die Energie- und Signalleitungen, welche von der Fahrerplatzanordnung zu einzelnen Bedienfunktionen führen, ausreichend lang und flexibel ausgeführt sind, dass eine Verschiebung der Fahrerplatzanordnung relativ zum Grundkörper ohne weiteres stattfinden kann, ohne dass es zu Leitungsunterbrechungen kommt.

Für die Führung der Abdeckung auf dem Grundkörper sind verschiedene Möglichkeiten denkbar. So kann zum Beispiel mit Hilfe von Schienen oder dergleichen eine reine Gleitführung vorgesehen werden. Alternativ wirken gemäß einer Ausgestaltung der Erfindung Rollen an Abdeckung oder am Grundkörper bzw. Schienen am Grundkörper oder an der Abdeckung zusammen, um eine leichtgängige Relativbewegung zwischen Abdeckung und Grundkörper zu erhalten. Diese soll möglichst so beschaffen sein, dass es nicht eines separaten Antriebs bedarf, um den Batterie-Aufnahmeraum frei zugänglich zu machen.

Damit die Abdeckung in den Endstellungen sicher gehalten ist, sieht eine Ausgestaltung der Erfindung vor, dass sie über Verriegelungsmittel in den Endstellungen verriegelt ist. Es versteht sich, dass die Verriegelungsmittel in geeigneter Weise entsperrbar sind.

Es ist jedoch auch denkbar, für die Verstellung der Abdeckung einen separaten Antrieb vorzusehen. Dies vor allen Dingen dann, wenn erwünscht ist, durch eine Verschiebung der Abdeckung nach hinten die Resttragfähigkeit zu verbessern. Eine Ausgestaltung der Erfindung sieht vor, dass Sensoren für das Lastgewicht und/oder die Lastschwerpunktlage und/oder die Hubgerüstneigung und/oder die Hubhöhe des Lastmittels vorgesehen sind und eine Steuervorrichtung für die Antriebsvorrichtung die Lage der Abdeckung in Abhängigkeit von mindestens einem der Sensorsignale steuert. Dadurch kann der Fahrzeugschwerpunkt des Flurförderzeugs durch Verschieben der Abdeckung in Richtung Lenkachse verschoben werden, und somit verbessert sich die Standsicherheit des Flurförderzeugs in Fahrzeuglängsrichtung. Durch Kombination dieser Verschiebung mit der maximal zulässigen Fahrgeschwindigkeit ist ein sicherer Betrieb des Fahrzeugs möglich. Muss zum Beispiel eine schwere Last sehr hoch angehoben werden, positioniert der Fahrer das Fahrzeug zum Beispiel vor einem Regal und stellt das neigbare Hubgerüst senkrecht. Sodann beginnt mit der Hubbewegung ab einer bestimmten erreichten Hubhöhe automatisch ein Verschieben der Abdeckung in Richtung Fahrzeugheck, bis eine maximal hintere Endlage erreicht ist. Der hierfür erforderliche Platz ergibt sich auch bei engen Raumverhältnissen aus der für Vierradfahrzeuge notwendigen Arbeitsgangbreite. Aus Sicherheitsgründen kann die Hinterseite der Abdeckung mit einem entsprechenden Sensor ausgerüstet werden, der der Schubbewegung entgegenstehende Hindernisse oder auch Personen detektiert und die Schubbewegung automatisch bei Auftauchen eines Hindernisses stoppt.

Mit der Erfindung ist eine Reihe von Vorteilen verbunden. Sie ermöglicht eine optimale Zugänglichkeit der Batterie für Wartung und Wechsel. Die verfahrbare Abdeckung erhöht die Resttragfähigkeit eines Gegengewichtsstaplers und damit die Wirtschaftlichkeit des Einsatzes. Aufgrund des extrem einfachen Batteriewechsels ist die Wirtschaftlichkeit des Flurförderzeugs verbessert. Verbessert ist auch die Sicht des Fahrers bei Stapelvorgängen in großen Hubhöhen und damit die Betriebssicherheit des Fahrzeugs, wenn die Abdeckung in Richtung Fahrzeugheck verschoben ist.

Die Erfindung soll nachfolgend anhand eines in Zeichnungen dargestellten Ausführungsbeispiels näher erläutert werden.
- Fig. 1: zeigt schematisch in Seitenansicht ein Flurförderzeug nach der Erfindung.
- Fig. 2: zeigt eine Darstellung des Flurförderzeugs nach Fig. 1 während eines Batteriewechsels.
- Fig. 3: zeigt das Flurförderzeug nach den Figuren 1 und 2 beim Anheben einer Last in großer Hubhöhe.

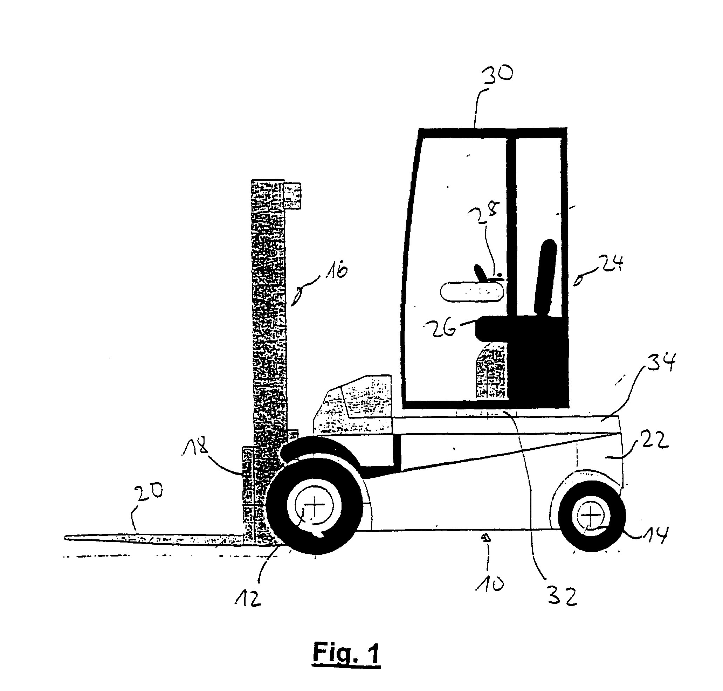

Das in den Figuren 1 bis 3 dargestellte Flurförderzeug weist einen Grundkörper 10 auf mit vorderer Lastachse 12 und hinterer Längsachse 14 bzw. einem einzelnen gelenkten Hinterrad, das auch als Zwillingsrad ausgeführt sein kann. Es weist ferner ein am Fahrzeuggrundkörper 10 neigbar angelenktes Hubgerüst 16 auf, an dem ein Gabelträger 18 mit einem Gabelzinkenpaar 20 zur Aufnahme einer Last höhenverschieblich gelagert ist. Der Fahrzeuggrundkörper 10 enthält alle für die Funktion eines derartigen Fahrzeugs notwendigen Komponenten, wie dies an sich aus dem Stand der Technik bekannt ist. Er weist an seinem hinteren Ende auch ein Gegengewicht 22 auf.

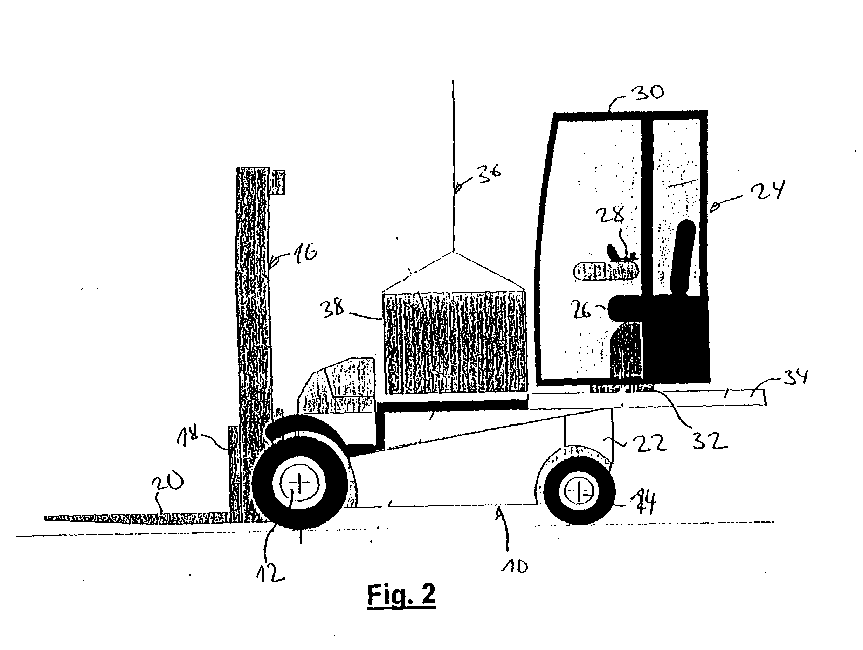

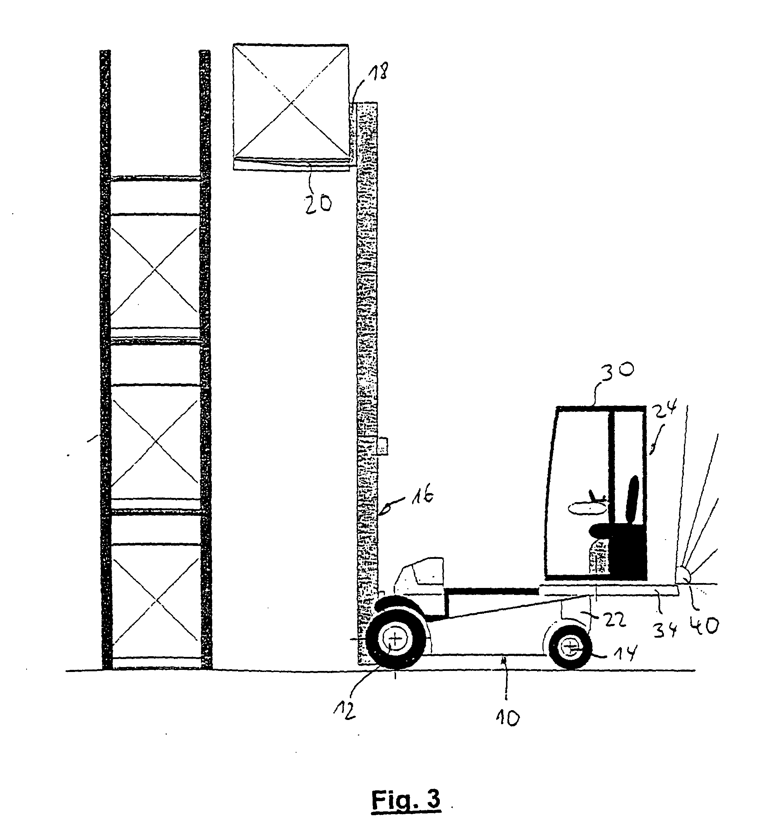

Eine Fahrerkabine 24 oder ein sogenanntes Fahrerplatzmodul, das einen Sitz 26, ein Lenkelement 28 sowie weitere nicht im Einzelnen dargestellte Bedienelemente aufweist sowie ein Schutzdach 30, ist über ein geeignetes Lager 32 ggf. drehbar auf einem Deckel 34 angeordnet. Wie sich aus den Figuren 1 bis 3 ergibt, ist der Deckel 34 horizontal verschiebbar zwischen einer Endposition, wie sie in Fig. 1 gezeichnet ist und einer zweiten Endposition, wie sie in den Figuren 2 und 3 gezeichnet ist. In der Fig. 1 deckt der Deckel 34 nach oben einen Batterie-Aufnahmeraum im Fahrzeuggrundkörper ab. In Fig. 2 ist dargestellt, wie mit Hilfe eines Hebezeugs 36 eine Batterie 38 aus dem Aufnahmeraum herausgehoben oder in diesen abgesenkt wird.

Der Deckel 34 wird mittels geeigneter Führungen am Grundkörper geführt, beispielsweise mit Hilfe von U-Schienen am Grundkörper, die mit Rollen an dem Deckel 34 zusammenwirken (nicht gezeigt). Die Relativbewegung zwischen Fahrzeuggrundkörper 10 und Deckel 34 kann mit Hilfe nicht gezeigter entsperrbarer Verriegelungen verhindert werden. Bei einer geeigneten Ausführung der Führung ist es möglich, den Deckel plus Kabine 24 ohne Zusatzantrieb manuell zu verschieben. Für einen sicheren Betrieb des Fahrzeugs kann die Position des Deckels 34 gegenüber dem Grundkörper 10 durch einen entsprechenden Sensor oder Schalter (nicht gezeigt) erfasst werden. Das Sensorsignal wird auf die Antriebssteuerung des Fahrzeugs gegeben, so dass für den Betrieb des Fahrzeugs gefährliche Situationen vermieden werden. So kann zum Beispiel ein Fahren des Fahrzeugs bei teilweise oder ganz geöffnetem Deckel 34 verhindert werden.

Bei speziellen Fahrzeugen kann der Deckel 34 einen Teil des Fahrzeuggegengewichts enthalten und mit einem separaten Antrieb bewegt werden, so dass sich der Gesamtschwerpunkt des Fahrzeugs mit dem Verschieben des Deckels 34 verschiebt. Dies verbessert die Standsicherheit des Gegengewichtsstaplers in Fahrzeuglängsrichtung. Durch die Kombination dieser Verschiebung mit einer maximal zulässigen Fahrgeschwindigkeit ist ein sicherer Betrieb des Fahrzeugs möglich.

Besonders vorteilhaft wirkt sich die zuletzt beschriebene Ausführungsform aus, wenn eine schwere Last sehr hoch angehoben werden soll, wie dies in Fig. 3 dargestellt ist. In diesem Fall positioniert der Fahrer das Fahrzeug zum Beispiel vor einem Regal und stellt das neigbare Hubgerüst 16 senkrecht. Sodann beginnt er mit der Hubbewegung. Ab einer bestimmten Hubhöhe beginnt automatisch mit Hilfe des geeigneten Verschiebeantriebs eine Verschiebung des Deckels 34 einschließlich der Kabine 24 in Richtung Fahrzeugheck. In Abhängigkeit von Lastgewicht, Lastschwerpunktslage, Hubgerüstneigung, Hubhöhe und weiteren für die Standsicherheit wichtigen Kriterien, welche durch geeignete und geeignet angebrachte Sensoren (nicht gezeigt) ermittelt werden, wird der Deckel 34 nach Maßgabe dieser Sensorsignale bis maximal in seine hintere Endlage gefahren. Der hierfür erforderliche Platz ergibt sich auch bei engen Raumverhältnissen aus der für z.B. Vierradfahrzeuge notwendigen Arbeitsgangbreite.

Aus Sicherheitsgründen ist die Hinterseite des Deckels mit einem Sensor 40 versehen, der die Schubbewegung hindernde Hinternisse oder auch Personen detektiert und die Bewegung automatisch stoppt, wenn Gefahr im Verzuge ist. Während des gesamten Stapelspiels kann mithin eine permanente Überprüfung der Gleichgewichtsbedingungen durch eine entsprechende intelligente Einheit vorgenommen werden, die mit den bereits erwähnten und weiteren Sensoren ausgerüstet ist. Die Bewegung der Abdeckung 34 wird gestoppt, sobald eine Gefährdung von Personen und Sachen oder der Standsicherheit des Fahrzeugs zu befürchten ist.

Zum Einstapeln der Last in das Regal gemäß Fig. 3 kann das Fahrzeug bei nach hinten geschobenem Deckel nur mit reduzierter Geschwindigkeit bewegt werden.

Wie erkennbar, führt das Zurückschieben des Deckels 34 zu einer nicht unerheblichen Verbesserung der Sichtverhältnisse beim Einstapelvorgang, insbesondere bei großen Hubhöhen. Dadurch erhöht sich die Sicherheit beim Betrieb des Fahrzeugs und die körperliche Belastung des Bedieners wird verringert.

## Patentansprüche

1. Batterie-elektrisch betriebenes Flurförderzeug, insbesondere Gegengewichtsstapler, mit einem Grundkörper (10) mit vorderer Lastachse (12) und hinterer Lenkachse (14), einem am Grundkörper angebrachten Hubgerüst (16) für ein am Hubgerüst höhenverstellbares Lastmittel und einer Fahrerplatzanordnung (24) auf dem Grundkörper mit Fahrersitz (26), Lenkmitteln (28) und Bedienelementen, **dadurch gekennzeichnet, dass** der Grundkörper (10) einen nach oben offenen Aufnahmeraum für die Batterie (38) aufweist und die Fahrerplatzanordnung (24) auf einer deckelartigen Abdeckung (34) angeordnet ist, die annähernd horizontal verschiebbar oder auch geneigt an der Oberseite des Grundkörpers (10) geführt ist zur wahlweisen Freigabe des Aufnahmeraums.

2. Flurförderzeug nach Anspruch 1, **dadurch gekennzeichnet, dass** die Abdeckung (34) seitlich mit Rollen oder Schienen versehen ist, die mit Schienen oder Rollen des Grundkörpers (10) zusammenwirken.

3. Flurförderzeug nach Anspruch 1 oder 2, **dadurch gekennzeichnet, dass** zwischen der Abdeckung (34) und dem Grundkörper (10) entsperrbare Verriegelungsmittel wirken, die die Abdeckung in den Endstellungen verriegeln.

4. Flurförderzeug nach einem der Ansprüche 1 bis 3, **dadurch gekennzeichnet, dass** eine Antriebsvorrichtung für die Abdeckung (34) vorgesehen ist.

5. Flurförderzeug nach Anspruch 4, **dadurch gekennzeichnet, dass** Sensoren für das Lastgewicht und/oder die Lastschwerpunktslage und/oder die Hubgerüstneigung und/oder die Hubhöhe des Lastmittels (18, 20) vorgesehen sind und eine Steuervorrichtung für die Antriebsvorrichtung die Lage der Abdeckung (34) in Abhängigkeit von mindestens einem der Sensorsignale steuert.

6. Flurförderzeug nach einem der Ansprüche 1 bis 5, **dadurch gekennzeichnet, dass** der Abdeckung (34) ein Positionssensor zugeordnet ist, welcher die Lage in mindestens einer Position erfasst und das Signal des Positionssensors auf eine Steuervorrichtung für den Antrieb des Flurförderzeugs gegeben wird.

7. Flurförderzeug nach Anspruch 5 oder 6, **dadurch gekennzeichnet, dass** die Abdeckung (34) am hinteren Ende zumindest einen Teil des Gegengewichts aufnimmt.

8. Flurförderzeug nach einem der Ansprüche 5 bis 7, **dadurch gekennzeichnet, dass** an der Rückseite der Abdeckung (34) mindestens ein Sensor (40) angeordnet ist, der ein Signal auf die Steuervorrichtung für den Abdeckungsantrieb gibt zwecks automatischer Unterbrechung der Bewegung der Abdeckung (34) bei einem vom Sensor (40) erfassten Hindernis.

9. Flurförderzeug nach einem der Ansprüche 1 bis 8, **dadurch gekennzeichnet, dass** die Fahrerplatzanordnung eine Fahrerkabine (24) aufweist und die Fahrerkabine (24) drehbar auf der Abdeckung (34) angeordnet ist.

## Claims

1. A battery-electrically operated industrial truck, particularly a counterweighted lifting truck, having a basic body (10) with a front load-supporting axle (12) and a rear steering axle (14), a lift frame (16) mounted on the basic body for a load-carrying means adjustable in height on the lift frame, and a driver's seat assembly (24) on the basic body including a driver's seat, steering means, and control elements, **characterized in that** the basic body (10) has a reception space open to the top to receive the battery (38) and the driver's seat assembly (24) is arranged on a lid-like cover (34) which is displaceably guided in an approximately horizontally or inclined displaceable fashion at the upper side of the basic body (10) to selectively unblock the reception space.

2. The industrial truck according to claim 1, **characterized in that** the cover (34) is provided with lateral rollers or rails which interact with rails or rollers of the basic body (10).

3. The industrial truck according to claim 1 or 2, **characterized in that** unlockable locking means act between the cover (34) and the basic body (10) which lock the cover in the end positions.

4. The industrial truck according to any one of claims 1 to 3, **characterized in that** a driving mechanism is proyided for the cover (34).

5. The industrial truck according to claim 4, **characterized in that** sensors are provided for detecting the weight of the load and/or the position of the load centre of gravity and/or the inclination of the lift frame and/or the lifting level of the load-supporting means (18, 20), and that a control device for the driving mechanism controls the position of the cover (34) in response to at least one of the sensor signals.

6. The industrial truck according to any one of claims 1 to 5, **characterized in that** the cover (34) has associated therewith a position sensor which detects at least one position and that the signal of the position sensor is provided to a control device for driving means of the industrial truck.

7. The industrial truck according to claim 5 or 6, **characterized in that** the cover (34) accommodates at least some part of the counterweight at the rear end.

8. The industrial truck according to any one of claims 5 to 7, **characterized in that** at least one sensor (40) is arranged at the back of the cover (34) which provides a signal to the control device for driving means of the cover in order to automatically interrupt the motion of the cover (34) in case of an obstacle detected by the sensor (40).

9. The industrial truck according to any one of claims 1 to 8, **characterized in that** the driver's seat assembly has a driver's cab (24) and the driver's cab (24) is rotatably arranged on the cover (34).

## Revendications

1. Chariot de manutention à fonctionnement électrique sur batterie en particulier chariot élévateur à contrepoids, comportant un corps de base (10), avec essieu de charge avant (12) et essieu directeur arrière (14), un cadre élévateur (16) fixé sur le corps de base pour un moyen de charge ajustable en hauteur sur le cadre élévateur et une configuration de poste de conduite (24) sur le corps de base avec siège de conducteur (26), moyens de direction (28) et éléments de manoeuvre, **caractérisé en ce que** le corps de base (10) comporte un espace de réception ouvert vers le haut pour la batterie (38) et **en ce que** la configuration de poste de conduite (24) est placée sur une couverture (34) en forme de couvercle qui est guidée en étant mobile approximativement horizontalement ou également en inclinaison sur la face supérieure du corps de base pour libérer à volonté l'espace de réception.

2. Chariot de manutention selon la revendication 1, **caractérisé en ce que** la couverture (34) est munie latéralement de rouleaux ou de rails qui coopèrent avec des rails ou des rouleaux du corps de base (10).

3. Chariot de manutention selon la revendication 1 ou 2, **caractérisé en ce que**, entre la couverture (34) et le corps de base (10), agissent des moyens de verrouillage déblocables qui verrouillent la couverture dans les positions d'extrémité.

4. Chariot de manutention selon l'une des revendications 1 à 3, **caractérisé en ce qu'**il est prévu un dispositif d'entraînement pour la couverture (34).

5. Chariot de manutention selon la revendication 4, **caractérisé en ce qu'**il est prévu des capteurs pour le poids de la charge et/ou la position du centre de gravité de la charge et/ou l'inclinaison du cadre élévateur et/ou la hauteur d'élévation du moyen de charge (18, 20) et qu'un dispositif de commande pour le dispositif d'entraînement commande la position de la couverture (34) en fonction d'au moins un des signaux de capteur.

6. Chariot de manutention selon l'une des revendications 1 à 5, **caractérisé en ce que** à la couverture (34) est associé un capteur de position qui détecte la position dans au moins une position et **en ce que** le signal du capteur de position est appliqué à un dispositif de commande pour l'entraînement du chariot de manutention.

7. Chariot de manutention selon l'une des revendications 5 ou 6, **caractérisé en ce que** la couverture (34) reçoit à l'extrémité arrière au moins une partie du contrepoids.

8. Chariot de manutention selon l'une des revendications 5 à 7, **caractérisé en ce que** à l'arrière de la couverture (34) est placé au moins un capteur (40) qui donne un signal au dispositif de commande pour l'entraînement de la couverture dans le but d'interrompre automatiquement le mouvement de la couverture si le capteur (40) détecte un obstacle.

9. Chariot de manutention selon l'une des revendications 1 à 8, **caractérisé en ce que** la configuration de poste de conduite comporte une cabine de conducteur (24) et que la cabine de conducteur (24) est placée de manière à pouvoir pivoter sur la couverture (34).
